**Europäisches Patentamt**

**European Patent Office**

**Office européen des brevets**

(19)

(11) **EP 1 464 980 A1**

(12) **EUROPEAN PATENT APPLICATION**

(43) Date of publication:
06.10.2004 Bulletin 2004/41

(51) Int Cl.7: **G01S 5/14**

(21) Application number: **03007287.0**

(22) Date of filing: **31.03.2003**

| | |
|---|---|
| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK**<br><br>(71) Applicant: **Sony International (Europe) GmbH**<br>**10785 Berlin (DE)** | (72) Inventor: **Rapp, Stefan ,**<br>**c/o Stuttgart Technology Center**<br>**70327 Stuttgart (DE)**<br><br>(74) Representative: **Müller - Hoffmann & Partner**<br>**Patentanwälte,**<br>**Innere Wiener Strasse 17**<br>**81667 München (DE)** |

(54) **Method for determining a spatial position**

(57) A method for determining the spatial position (R1, R2, R3) of a location (R) is proposed, wherein based on a determined normalized signal strength of at least one received radio signal (s1, s2, s3) from at least one radio source (S1, S2, S3) spatial distance data (SDD) at least describing a spatial distance (D1, D2, D3) and/or a signal distribution are determined based on which spatial position information (SPI) being descriptive for a spatial position (R1, R2, R3) of a receiving location (R) is derived.

Fig. 3

**EP 1 464 980 A1**

**Description**

The present invention relates to a method for determining a spatial position and in particular to a method for determining a spatial position of a given location.

Nowadays, many electronic appliances, such as handheld devices or the like, are equipped with position information means for determining the position of the electronic appliance and, therefore, the position of the user thereof. Often, the so-called global positioning system or GPS technique is used so as to derive spatial position information with respect to the location of the equipment and, therefore, to derive the location of the user.

A main drawback of known spatial position information systems is their complicated structure as they need a comparable large amount of additional devices, in particular in the case of the GPS system. As a consequence, known position information systems are expensive and unconvenient.

It is an object of the present invention to provide a method for determining a spatial position which can be realized in a particular simple and reliable manner without the need of additional and complicated equipment and at low cost.

The object is achieved by methods for determining spatial position information of a location according to the characterizing features of independent claim 1 and/or of independent claim 3. Preferred embodiments of the inventive method are within the scope of the dependent sub-claims. The object of the present invention is further achieved by a system for determining the spatial position of a location, a computer program product and a computer readable storage medium according to the characterizing features of independent claims 13, 14, and 15, respectively.

According to a first solution, the inventive method for determining the spatial position of a location comprises the steps of receiving at least one radio signal from at least one radio source, determining a - in particular normalized - signal strength for each of said at least one received radio signals, determining spatial distance data at least describing a spatial distance of a receiving location where said at least one radio signal was received with respect to said at least one radio source, and deriving and/or providing spatial position Information based on said spatial distance data and being descriptive for a spatial position of said receiving location as said location for which the spatial position has to be derived.

It is, therefore, a basic idea of the first inventive solution to relate the spatial position of a location to be derived to at least one radio source the signal of which can be received and analyzed with respect to the signal strength. As the signal strength of the received radio signal is distance-dependa,nt spatial distance data at least describing a spatial distance of the receiving location with respect to said at least one radio source can be obtained. Based on the derived spatial distance data spatial position information can be derived which are descriptive for a spatial position of the receiving location. Consequently, only a limited amount of comparable simple equipment is necessary for carrying out the inventive method.

Alternatively or additionally, a step of deriving said spatial distance data is supported and/or enhanced by a process of analyzing and/or recognizing a distribution pattern of said radio signals within a given frequency range.

According to a second solution, the inventive method for determining the spatial position of a location comprises the steps of receiving at least one radio signal from at least one radio source, determining a - in particular normalized - signal strength for each of said at least one received radio signals, determining, analyzing and/or recognizing a distribution pattern of said at least one radio signal within a given frequency range, in particular as a fingerprint, and deriving and/or providing spatial position information based on the result of said determining, analyzing and/or recognizing a distribution pattern of said at least one radio signal and being descriptive for a spatial position of a receiving location where said at least one radio signal was received with respect to said at least one radio source as said location for which the spatial position has to be derived.

It is therefore a basic idea of the second inventive solution to relate the spatial position of a location to be derived to at least one radio source the signal of which can be received and analyzed with respect to the signal strength. As the received radio signal generates a signal distribution within a given frequency range which is characteristic for or which comprises characteristic features for the receiving location, a process of determining, analyzing and/or recognizing said signal distribution is used for determining said receiving location.

According to a first alternative approach of the inventive method a single radio signal stemming from a signal radio source is received and used. In some cases, such an approach might be necessary, in particular, if reference is taken to that particular single radio source only and if a limited accuracy of the derived spatial position data is sufficient.

Alternatively, a plurality radio signals from an according plurality radio sources is received and used. According to this measure a correlation of the derived spatial distance data and spatial position information can be generated to evaluate the receiving location and its coordinates with respect to the plurality of the radio sources involved. This increases the accuracy of the derived coordinates of the receiving location.

In some cases in particular two or three radio sources and/or two or three radio signals might be sufficient. However, in other cases the most appropriate number of sources and/or of signals might be higher. It is assumed that it has a direct relationship to the precision and robustness of the position estimation. However, for practical systems, sometimes ten or even more frequencies could be of advantage. Because of attenuation by the local surroundings and mountains, the location a specific single signal strength suggests is more like a circular area than just the border of a circle.

According to a preferred embodiment of the inventive method for determining a spatial position of a location said spatial position information is derived to describe at least one - in particular possible - spatial position of the receiving location relative to each of said involved radio sources. This might be in particular done by giving the spatial distance of the receiving location with respect to each of said radio sources. In this context no absolute position information with respect to the receiving location is given, for instance, in the sense of global coordinates or the like. Instead, the receiving location is compared to the locations of the radio sources in a relative way, for instance, by stating the distances with respect to each of said radio sources.

It is of a further advantage, if within the inventive method radio source information is supplied, provided, derived and/or received being descriptive for at least one or for any plurality of the following aspects:

- an absolute spatial position,
- an emisison frequency or an emission frequency range,
- an absolute emission power or an absolute emission signal strength,
- occlusion data,

for each of said at least one radio source and/or for each of said at least one radio signal.

There are several ways possible for obtaining said radio source information RSI:

The RSI information is largely available from governmental organisations. In Germany, responsibility for licences in the FM band (and others) lies on a federal state level. For Baden-Württemberg, e.g., the responsible authority seems to be 'Landesanstalt für Kommunikation Baden Württemberg' (LFK). A list of transmitters and their strength in kW is available for Baden Württemberg at

http://www.lfk.de/programme/hoerfunk/privatehoerfunkangebote/main.html

that, together with the respective lists from the public broadcaster SWR at

http://www.swr.de/frequenzen/

or

http://www.swr.de/frequenzen/hf/ukw_bw.html

seems to give a complete and up-to-date description for Baden-Würtemberg. For Switzerland, 'Bundesamt für Kommunikation' (BAKOM) seems to be the relevant authority. At

http://www.bakom.ch/de/funk/freq_nutzung/standorte/index.html

there is available a map of Switzerland with transmitters for TV, Radio and GSM and their respective frequency allocation.

The radio source information may also be contained in the information conveyed with the received radio signal. Alternatively, it may be received from a storage means within a used receiving device or from an external provider.

Sometimes, an absolute spatial position of the receiving location is useful or necessary. Therefore, according to a further preferred embodiment of the inventive method said spatial position information is derived to describe at least one - in particular possible - absolute spatial position of the receiving location with respect to each of said involved radio source, in particular based on or involving said radio source information and/or in particular by involving a process of triangulation.

A particular simple embodiment of the inventive method is realized by using FM radio stations as radio sources, in particular in the range from about 80 MHz to about 120 MHz.

FM is prefered because of the area size the transmitters reach. It is believed that in this frequency range distribution of transmitters is best suited for a rough location estimation. Also frequency reuse is more diverse than for GSM, DAB, such that in this band, the method makes most sense. For bands with smaller reach transmitters, reuse of frequencies is much higher, such that only looking at signal strength is most probably not sufficient.

Additionally or alternatively, a process of sweeping over a given frequency range is performed so as to scan for appropriate radio sources and/or radio signals and/or combinations thereof.

A method for determining a spatial position of a location may be realized by using a radio receiving device, in particular in the form of a radio broadcast receiver, a personal digital assistant, a mp3-player and/or the like.

According to a further preferred embodiment of the ineventive method a process may be performed of naming and/or associating locations/positions as home locations/positions or as "at home" if thes are encountered frequently over night.

Additionally or alternatively, a process may be performed of naming and/or associating locations/positions as home location/position specifications with calendar entries.

Also, a process may be performed of switching profiles of mobile phones which is in particular based on locations.

Further, a process may be performed of switching user preferences for music player devices which is in particular based on locations.

Additionally or alternatively, a process may be performed of switching user preferences for pda devices which is in particular based on locations.

According to a further preferred embodiment of the ineventive method a process may be performed of electronic travel book devives which is in particular based on locations.

According to a further aspect of the present invention, a system, apparatus or device is provided in each case being adapted and in particular being programmed to perform the inventive method for determining the spatial position of a location or the steps thereof.

It is a further aspect of the present invention to provide a computer program product comprising computer program means being adapted to perform the inventive method for determining the spatial position of a location or the steps thereof, when it is executed on a computer, a digital signal processing means and/or the like.

Further, a computer readable storage medium is provided comprising the inventive computer program product.

The present invention will be elucidated in more detail taking into account the following remarks:

The strength of local transmitters for e.g. FM radio can be used to yield a rough localization of a mobile device. The advantage over localization information via GPS or GSM is the by far smaller cost both for receiver and infrastructure and power consumption, e.g. higher signal strength, long design tradition, no protocol decoding required. However, it is likely that the accuracy is inferiour compared to e.g. GPS. For some application especially if combined with other information the information can be sufficiently exact.

Various systems for localization information exist, most well known are via Global Positioning System (GPS) or via cellular phone infrastructure (cell information deducible from protocol), and infra red (IR) or radio frequency (RF) beacons for indoor use. Blaupunkt used signal strength information for association Radio frequency ↔ station name before Radio data system (RDS) was introduced (in the 1980ies, a high end car stereo called 'Berlin').

For some device classes, the present solutions are too expensive. E.g. receivers for GPS are rather expensive, decoding of protocols requires computation power (and thus energy) and storage. For cars, GPS requires installation of receiver in trunk lid or roof top, GPS is not receiving if stowed away etc.

One idea is to use a sweep over the frequency range (preferably that of the FM-Radio range) to asses the strength of several receivable transmitters; this profile is typical for a certain region. The strength of radio stations is dependent of the distance between transmitter and receiver and to occlusion by mountains and buildings.

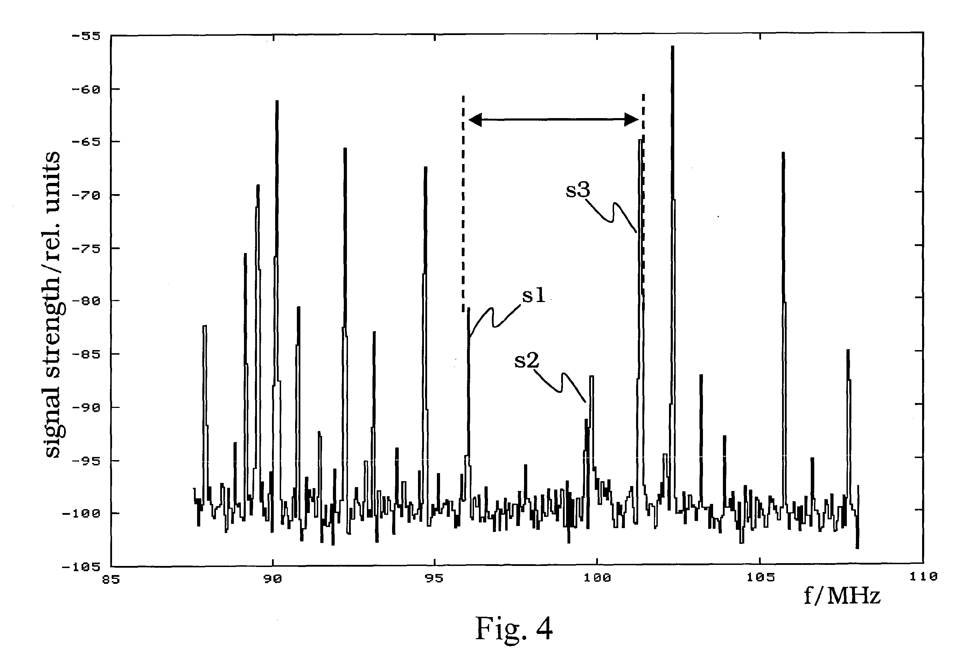

Figure 4 exemplifies the frequency spectrum typically in the area of Stuttgart. There exist certain and characteristic peaks, e.g. for local radio stations such as 90.1, 92.2, 94.7,102.3,105.7,... as well as smaller ones from more distant ones such as the ones at 99.9, 106.6.

FM reception is possible with very little energy. In the early days, radio reception was done without any external power, using only the energy of the transmission, making it suitable for small portable devices such as PDA or portable mp3 players. For these, including an FM receiver could be fortunate for other reasons as well.

The longitude/latitude information might not be directly accessible from the spectrum. But in this case several possibilities exist for obtaining the respective information:

- No need for that in the case of an mp3 player, as an mp3 player could prefer songs in random play that the user requested/wanted to hear before at this location, a reoccurring travel can be identified by the sequence of spectras, the user can store a localization meaningful to him by pressing a button etc.

- A centralized server can give the association if the mobile device is at least intermittent connected to it.

- Devices can directly exchange this information for known positions, e.g., a PDA or mp3 player is generally at the owners home place over night, the work place at day time etc.

To face the problem that transmitters change because e.g. radio stations are closed down or new transmitters are installed:

- A centralized service can keep track of that (e.g. by communication with broad-casters/telecom/regulation authorities) and update the clients when connected e.g. for hotsync with PC.
- A client can detect 'single peak deviations' in spectrum and communicate that to centralized server or other clients.

Vague position information can be improved by various techniques:

- Repeated sampling over time and averaging (device localization changes only slowly over time), used e.g. also to improve GPS readout.

- Combination with other sources of information: PDA has in the calendar for the current time a meeting in Hamburg, say, so it is likely that the current position is 'Hamburg'. A travelling salesperson visits a certain client at a certain place every first Monday in a month, giving hints for the meeting time and the travel thereto. The mobile device is usually at home during night.

Possible application scenarios are:

- Location aware music player,

- Automated drivers logbook: for many professionals, keeping a logbook is obligatory. An electronic logbook could propose entries based on mileage readouts (from the car), departure and arrival time and combine that with a target guess based on the localization information (from this invention) taking into account the spectrum profile sampled from previous trips to this location. User only needs to accept proposed entry if location is guessed right (which is more likely and more worthwhile for the more frequent target destinations).

- Automated calendar: Employees required to write monthly reports, travelling salespersons etc. could take advantage from the automated holiday / biz trip marker in the calendar, noting the days they were at the office, some distant client, at home etc.

- Shopping reminder: Remind user to shop a specific item if pda comes close to a certain location.

- Route advisor: Commuters having the choice between different routes can be advised/look at statistics on the different routes by automatically collecting data based on localization from frequency profile/time/speed, mileage, petrol consumption readouts from car etc. Certain routes will have specific frequency spectrum sequences because of tunnels, mountains etc. giving local differences despite the similar influence of transmitter distance on similar routes.

The following advantages can be expected when using FM techniques:

- FM receivers are extremely cheap.
- FM receivers require very little energy.
- FM reception technology is well known (long design tradition).
- Naturally' occurring transmitters are used - no costs for infrastructure.
- FM reception is a useful feature for mobile devices in itself.
- FM antenna installation for cars can be reused. (no additional installation required).
- FM is receptible outdoors and indoors.

Further explanations are given below:

Explicit user action.

Establishing an association between a location specification and a frequency fingerprint is triggered by an explicit user action. Similar to radio station presets, the users have a number of (possibly virtual) buttons at their disposal that they can assign to location meanings that are useful to them, e.g. button 1 means 'at home', button 2 'at the office', button 3 'at the city center bus stop', 'at bondi beach' and so forth. Whenever users activate this associate-function, a frequency scan is started and the spectrum or a coded representation of it is stored in the device's memory or transferred via telecommunication means to a central server. Repetitive usage of the function adds up more and more example spectra for this location.

Independent gathering by the device.

The mobile device can repeatedly gather spectrum information and find timespans of very similar spectral distribution, i.e. phases where the device is not changing position. Finding similarities between 'no position change' time spans, the device can detect spectrum situations that reoccur over time and hence seem characteristic or important for the user. Such information is used to decide on a number of pattern clusters, on whether to start with a new location cluster with a previously unseen spectrum, discard or collapse clusters etc. Heuristic information can be used to label spectrum clusters, two methods being explicitly named:

- Clusters that are found to occur at most of the nights of the year are assosiated with the name 'at home' or the like.
- Clusters that coincide with a time span of an entry in the calender that has a location specification are associated with this location specification.

Distributed knowledge acquisition.

The association between fingerprint spectra and locations can be shared between devices over a communication infrastructure. This is obviously not useful for user-specific descriptions such as 'at home', 'at the office' and so forth, but for generally used location specifications, be that symbolic (Hamburg, Bahnhofstraße 13 in Munich, Bondi beach, Matterhorn) or numeric (like any of the geographic position systems). Genera) symbolic location information can be retrieved e.g. from entered location information in the calender, or from the (additional) inference of combining 'the place, the device is usually over night' with the City/Streetname of the user's home address stored in the PDA's address dictionary. The preferred method would be that exemplary or prototypical samples would be transferred to a central server, possibly together with a proposal for a name or location specification. The server sends back a description of the location. The server can then also store the association and give this knowledge to other clients.

Usage and applications.

During usage, a frequency spectrum is gathered from time to time and the fingerprint is compared to the samples of the preset locations. Classification to neither of the user specified locations is possible by establishing a proximity threshold that needs to be exceeded or by an additional null/garbage class as is common practice in pattern recognition. Preferably, the fingerprint consists of a vector of a fixed number of elements, where each element is the (normalized) strength meassured for a specific frequency, e.g. a vector consists of the signal strengths for all frequencies between 87.5 and 108 MHz in steps of 0.25 MHz. As possible metrics to calculate the similarity of the currently sampled fingerprint to the stored patterns, several different methods can be used: Block distance (sum of absolute differences for each element), Euclidean distance (square root of summed squared differences), cosine of vectors' angle (cosine of the angle between the n-dimensional vectors in n-dimensional space), spearman rank correlation coefficient, Hellinger distance, (symmetrical) Kullback-Leibler divergence and the output of a multilayer perceptron (with two vector's complete set of elements as input neurons).

The appropriate class can be signalled to the user and this information can be used to change the device's behaviour or trigger an action. Example usages are:

- switch to a profile that the user associated with the location preset or is bound to this location preset. In the profile there can for example be stored the settings of the ring tones, listening preferences, start pages for web browsers and the like, such that the mobile phone automatically switches to vibration alarm in the vicinity of the office location, the personal music player plays back music suitable for the beach while being at the beach, the PDA's web browser starts up with the time table information close to the central city bus station and the like.

- trigger a location alarm to remind the user to buy or pick up something at a specific location / remind the user 'at the right place'

- store location information information for later retrieval, e.g. for purposes of documenting place of work of a traveling salesperson

- power up or down the device when leaving a location, esp. the 'home' location, at the airport, church or hospital.

In the following, the invention will be described in more detail taking reference to the accompanying figures on the basis of preferred embodiments of the invention.

**Fig. 1-3** schematically describe three different scenarios in which the inventive method for determining a spatial position can be involved.

**Fig. 4** describes a typical signal pattern which can be used for deriving a spatial position according to an embodiment of the present invention.

**Fig. 5** describes a situation for location estimation according to another embodiment of the present invention.

**Fig. 6** describes a situation for location estimation according to another embodiment of the present invention.

In the following, identical reference symbols are used for elements and structures having comparable functions and properties. A detailed description in each case of their occurrence is not repeated.

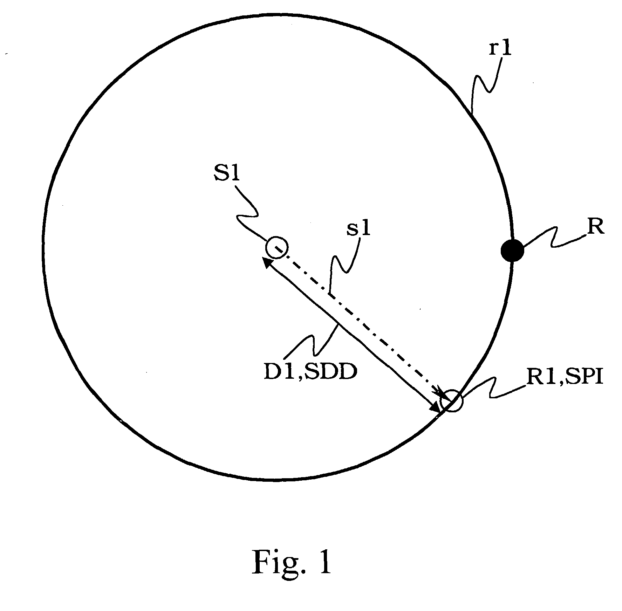

In Fig. 1 there is given a location R at which a radio receiving device is located in space, R is also called receiving location. Using said radio receiving device a first radio signal s1 stemming from a first radio source S1 is received. It is assumed that with respect to the given first radio source S1 radio source information RSI is available and obtained. Then, the actual signal strength of the received first radio signal s1 is measured. Using the obtained radio source information RSI a normalized signal strength is derived. Upon evaluation of the normalized signal strength of the first radio signal s1 spatial distance data SDD can be derived which are at least descriptive for the spatial distance D1 between the receiving location R and the location of the first radio source S1.

In the situation shown in Fig. 1 it is assumed that there is no directional information available, therefore, the derived spatial position information SPI obtained from the spatial distance data SDD suggests a variety of possible or potential spatial positions R1 for the receiving location R, said variety or multiplicity of possible or potential spatial positions R1 approximately lying on a circle r1 the radius of which being the derived distance D1 between the first radio source S1 and the receiving location R and the center of which being the location of the first source S1. Consequently, there is a strong ambiguity with respect to the mentioned spatial position information SPI regarding the actual spatial position of the receiving location R.

If, in the case of Fig. 1 absolute coordinates are given for the location of the first radio source S1 the absolute position of the receiving location R can be derived only within the above described circle having the radius D1 and the center at the location of the first radio source S1. That means that the position vector $\vec{R}1$ of the possible spatial location R1 of the receiving location is given be the spatial position vector $\vec{S}1$ of the first radio source S1 and the frst distance D1 and is in Cartesian coordinates parameterized by an angle $\alpha$, i.e.:

$$\vec{R}1 := \vec{S}1 + \begin{pmatrix} D1 \cdot \cos(\alpha) \\ D1 \cdot \sin(\alpha) \end{pmatrix} \text{ with unknown } \alpha \in (0, 2\pi] \ .$$

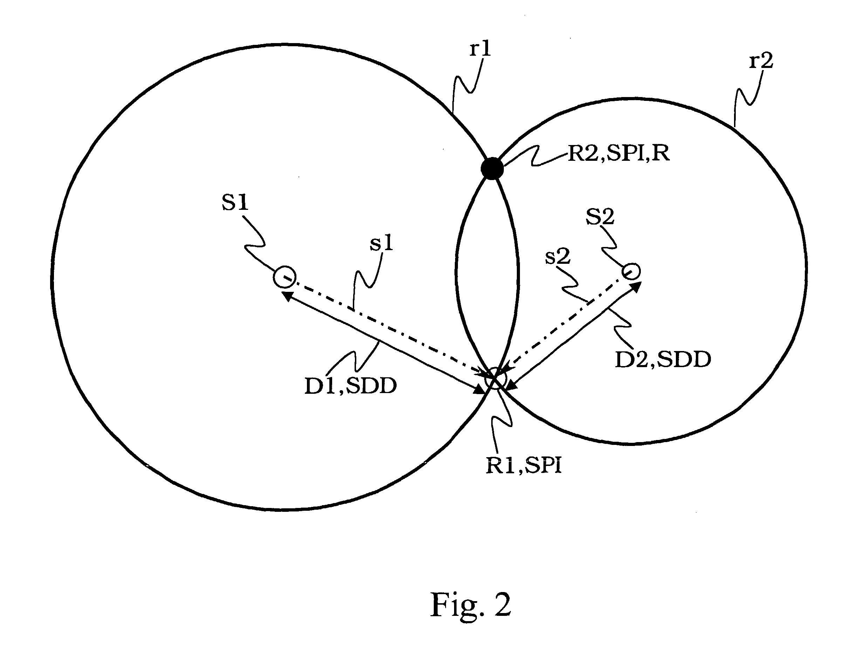

Fig. 2 demonstrates a situation in which two radio sources S1 and S2 are involved, the radio signals s1 and s2, respectively, of which being received and analyzed so as to derive normalized signal strength thereof. Based on the derived normalized signal strengths of said first and second radio signals s1 and s2 spatial distance data SDD are derived at least describing the distances D1 and D2 of the receiving location R with respect to said first and said second radio source S1 and S2, respectively.

As can be seen by Fig. 2 each of the distances D1 and D2 defines a circle r1 and r2 with the respective first and second radio source S1 and S2 in its center and having radiuses D1 and D2, respectively. These circles r1 and r2 intersect each other at the two possible spatial positions R1 and R2 for the receiving location R described by the spatial position information SPI. That means, that there is an reduced ambiguity for the spatial position for the receiving location R. From the measurement with two radio sources S1, S2 it cannot be decided which of the possible spatial positions R1 and R2 coincides with the actual spatial position of the receiving location R.

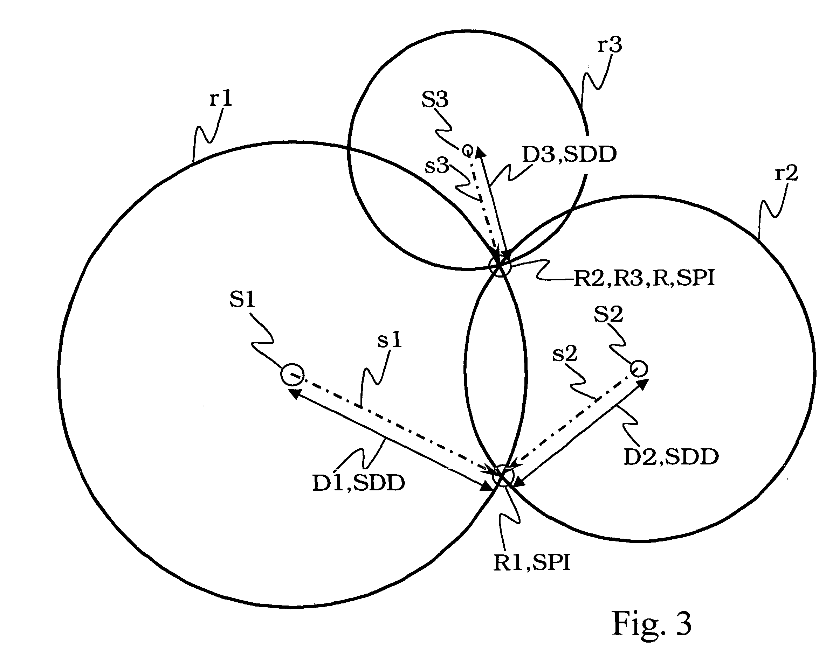

The situation of Fig. 3 shows in addition to the situation shown in Fig. 2 a third radio source S3 emitting a third radio signal s3. According to the evaluation of the normalized signal strength of the third radio signal s3 a distance D3 between the third radio source S3 and the receiving location R can be derived. Said distance D3 also describes a circle r3 with the third radio source S3 in its center. The three circles r1, r2 and r3 for the three radio sources S1, S2 and S3 intersect in one point, namely at the spatial positions R2 being identical to the spatial position R3. Therefore, the spatial position for the receiving location R can unambiguously be referred to as the spatial positions R2, R3.

If for each of the radio sources S1, S2 and S3 the absolute spatial positions or coordinates are given, also the absolute coordinates of the spatial position for the receiving location R are well-defined.

Sometimes, radio source information RSI can be obtained by analyzing the spectrum of a certain frequency range. As the respective signal strengths are modulated by the geometrical properties of the landscape, each of the distinct signals have position-dependant signal strengths. Therefore, the relation between the signal strengths of different signals may be referred to as a signature for a distinct position on the earth.

In Fig. 4 there is shown the signal strength in relative units as a function of the signal frequency f measured in MHz. There are several peaks describing different radio channels or radio programs. In the middle, there are Indicated first to third radio signals s1 to s3 having distinct signal strengths. Comparing these signal strengths of the signals s1 to s3 gives a distinct pattern which is in the case of Fig. 4 characteristic for a certain location on the earth.

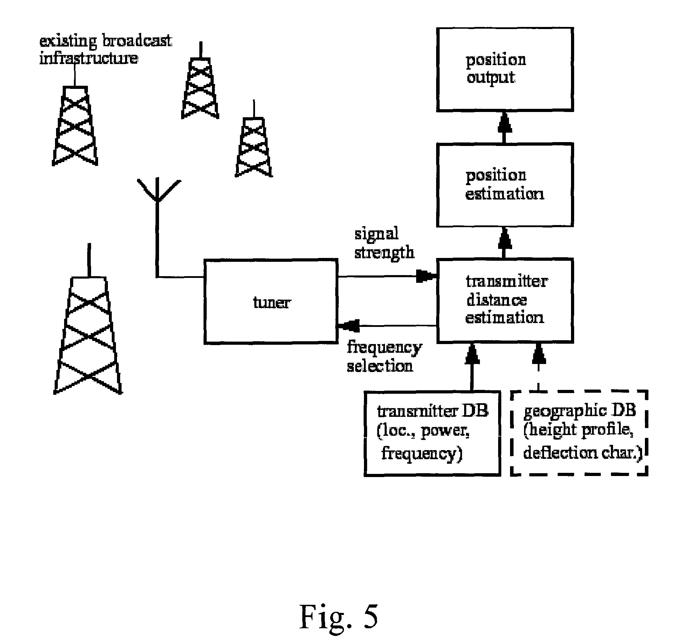

Fig. 5 shows the functional blocks of a distance calculation from several transmitters of an existing infrastructure with known characteristics. A tuner is deployed to measure the signal strength at several known frequencies. From the meassured signal strength of each transmitter's frequency, and the known transmitting power of it, a distance between the antenna and the transmitter is estimated. Pairs of transmitter location and estimated distance are signaled to the position estimation component. From the estimated distances and the positions of the transmitters, the most likely position of the antenna is estimated. The estimated position is given to the position output component that can be part of a location sensitive application program or the like.

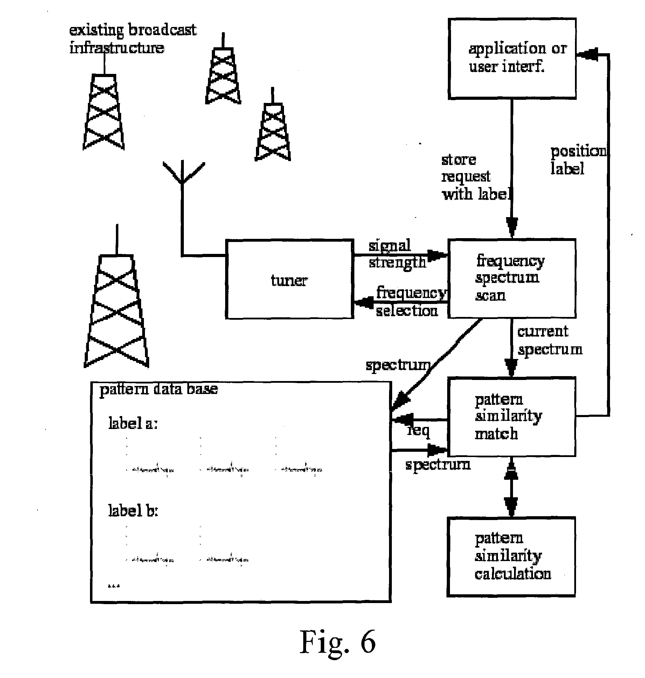

Fig. 6 exemplifies the blocks of a setup, where no station information is known a priori. User or system initiated events trigger the meassurement of a frequency spectrum for a specific label. The meassured frequency patterns are stored associated with the label in the pattern data base. At fixed time intervals or upon request from the user interface or application, a frequency spectrum is meassured and the similarity match component compares the spectrum with the stored patterns in the data base. Pairs of patterns (a reference pattern from the data base and the current spectrum pattern) is given to the pattern similarity calculation part which gives back a similarity meassure. If sufficient similarity is found by the pattern similarity match part, the corresponding label specifying the location is signaled to the user interface or application.

**List of Reference Symbols**

| | |
|---|---|
| **D1** | first distance, distance between receiving location and first radio source |
| **D2** | second distance, distance between receiving location and second radio source |
| **D3** | third distance, distance between receiving location and third radio source |
| **R** | receiving location |
| **r1** | first circle, circle of possible spatial positions for receiving location w.r.t. the first radio source |
| **r2** | second circle, circle of possible spatial positions for receiving location w.r.t. the second radio source |
| **r3** | third circle, circle of possible spatial positions for receiving location w.r.t. the third radio source |
| **R1** | first possible spatial position, possible spatial position of receiving location w.r.t. the first radio source |
| **R2** | second possible spatial position, possible spatial position of receiving location w.r.t. the second radio source |
| **R3** | third possible spatial position, possible spatial position of receiving location w.r.t. the third radio source |
| **RSI** | radio source information |
| **S1** | first radio source |
| **S2** | second radio source |
| **S3** | third radio source |
| **s1** | first radio signal, radio signal of first radio source |
| **s2** | second radio signal, radio signal of second radio source |
| **s3** | third radio signal, radio signal of third radio source |
| **SDD** | spatial distance data |
| **SPI** | spatial position information |

**Claims**

1. Method for determining the spatial position of a location,
   comprising the steps of:

   - receiving at least one radio signal (s1, s2, s3) from at least one radio source (S1, S2, S3),
   - determining a - in particular normalized - signal strength for each of said at least one received radio signal (s1, s2, s3),
   - determining spatial distance data (SDD) at least describing a spatial distance (D1, D2, D3) of a receiving location (R) where said at least one radio signal (s1, s2, s3) was received with respect to said at least one radio source (S1, S2, S3), and
   - deriving and/or providing spatial position information (SPI) based on said spatial distance data (SDD) and being descriptive for a spatial position (R1, R2, R3) of said receiving location (R) as said location for which the spatial position has to be derived.

2. Method according to claim 1,
   wherein the step of deriving said spatial distance data (SDD) is supported and/or enhanced by a process of analyzing and/or recognizing a distribution pattern of radio signals (s1, s2, s3) within a given frequency range.

3. Method for determining the spatial position of a location,

comprising the steps of:

- receiving at least one radio signal (s1, s2, s3) from at least one radio source (S1, S2, S3),
- determining a - in particular normalized - signal strength for each of said at least one received radio signal (s1, s2, s3),
- determining, analyzing and/or recognizing a distribution pattern of said at least one radio signal (s1, s2, s3) within a given frequency range, in particular as a fingerprint, and
- deriving and/or providing spatial position information (SPI) based on the result of said determining, analyzing and/or recognizing a distribution pattern of said at least one radio signal (s1, s2, s3) and being descriptive for a spatial position (R1, R2, R3) of a receiving location (R) where said at least one radio signal (s1, s2, s3) was received with respect to said at least one radio source (S1, S2, S3) as said location for which the spatial position has to be derived.

4. Method according to claim 3,
wherein spatial distance data (SDD) at least describing a spatial distance (D1, D2, D3) of said receiving location (R) is determined where said at least one radio signal (s1, s2, s3) was received with respect to said at least one radio source (S1, S2, S3),.

5. Method according to any one of the preceding claims,
wherein a single radio signal (s1) from a single radio source (S1) is received and used.

6. Method according to any one of the preceding claims 1 to 4,
wherein a plurality - in particular of two or three - radio signals (s1, s2, s3) from an according plurality - in particular of two or three - radio sources (S1, S2, S3) is involved and in particular received essentially at the same receiving location (R).

7. Method according to any one of the preceding claims,
wherein said spatial position information (SPI) is derived to describe at least one - in particular possible - spatial position (R1, R2, R3) of said receiving location (R), in particular relative to each of said involved radio sources (S1, S2, S3) and/or in particular by giving a spatial distance (D1, D2, D3) of the receiving location (R) with respect to each of said radio sources (S1, S2, S3).

8. Method according to any one of the preceding claims,
wherein radio source information (RSI) is supplied, provided, derived and/or received being descriptive for at least one or for any plurality of the following aspects:

- an absolute spatial position of said radio sources (S1, S2, S3),
- an emisison frequency or an emission frequency range of said radio sources (S1, S2, S3) and/or radio signals (s1, s2, s3),
- an absolute emission power or an absolute emission signal strength of said radio sources (S1, S2, S3) and/ or radio signals (s1, s2, s3),
- occlusion data for said radio sources (S1, S2, S3) and/or radio signals (s1, s2, s3).

9. Method according to any one of the preceding claims,
wherein said spatial position information (SPI) is derived to describe at least one - in particular possible - absolute spatial position (R1, R2, R3) of the receiving location (R) with respect to each of said involved radio sources (S1, S2, S3), in particular based on or involving said radio source information (RSI) and/or in particular by involving a process of triangulation.

10. Method according to any one of the preceding claims,
wherein FM radio stations are used as said radio sources (S1, S2, S3), in particular in the range from about 80 MHz to about 120 MHz.

11. Method according to any one of the preceding claims,
wherein a radio receiving device is used, in particular in form of a radio broadcast receiver, a personal digital assistant (PDA), a mp3-player, and/or the like.

12. Method according to any one of the preceding claims,

comprising a process of sweeping over a given frequency range so as to scan for appropriate radio signals (s1, s2, s3) and/or appropriate radio sources (S1, S2, S3) and/or combinations thereof.

13. Method according to any one of the preceding claims,
    wherein a process is performed of naming and/or associating locations/positions as home locations/positions or as "at home" if thes are encountered frequently over night.

14. Method according to any one of the preceding claims,
    wherein a process is performed of naming and/or associating locations/positions as home location/position specifications with calendar entries.

15. Method according to any one of the preceding claims,
    wherein a process is performed of switching profiles of mobile phones which is in particular based on locations.

16. Method according to any one of the preceding claims,
    wherein a process is performed of switching user preferences for music player devices which is in particular based on locations.

17. Method according to any one of the preceding claims,
    wherein a process is performed of switching user preferences for pda devices which is in particular based on locations.

18. Method according to any one of the preceding claims,
    wherein a process is performed of electronic travel book devives which is in particular based on locations.

19. System for determining the spatial position of a location,
    which is adapted and in particular programmed to perform the method for determining the spatial position (R1, R2, R3) of a location (R) according to any one of the claims 1 to 18 and/or the steps thereof.

20. Computer program product comprising computer program means being adapted to perform the method for determining the spatial position (R1, R2, R3) of a location (R) according to any one of the claims 1 to 18 or the steps thereof when it is executed on a computer means, a digitial signal processing means and/or the like.

21. Computer readable storage medium comprising a computer program product according to claim 20.

Fig. 1

Fig. 2

EP 1 464 980 A1

Fig. 3

EP 1 464 980 A1

Fig. 4

EP 1 464 980 A1

existing broadcast infrastructure

tuner

signal strength

frequency selection

transmitter distance estimation

position estimation

position output

transmitter DB (loc., power, frequency)

geographic DB (height profile, deflection char.)

Fig. 5

EP 1 464 980 A1

Fig. 6

European Patent
Office

**EUROPEAN SEARCH REPORT**

Application Number

EP 03 00 7287

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 304 250 A (NAT VULCAN SAFETY PRODUCTS LTD) 12 March 1997 (1997-03-12) * page 3, line 12 - page 5, line 19; figures 1-3 * | 1-12,20, 21 | G01S5/14 |
| X | US 5 404 376 A (DENT PAUL W) 4 April 1995 (1995-04-04) * column 2, line 27 - column 5, line 43; figures 1-3 * | 1,5-7, 9-12,20, 21 | |
| X | US 6 353 743 B1 (KARMEL CLAYTON R) 5 March 2002 (2002-03-05) * column 8, line 61 - column 10, line 23; figures 4-6 * | 1,5-7, 9-12,20, 21 | |
| X | US 6 246 861 B1 (FATTOUCHE MICHEL ET AL) 12 June 2001 (2001-06-12) * column 5, line 8 - column 6, line 18; figures 1-3 * | 1,5-7, 9-12,20, 21 | TECHNICAL FIELDS SEARCHED (Int.Cl.7) |
| X | FR 2 794 313 A (TELEDIFFUSION FSE) 1 December 2000 (2000-12-01) * page 1, line 28 - page 4, line 17; figures 1-3 * | 1,5-7, 9-12,20, 21 | G01S H04Q |
| X | GB 2 352 134 A (AIRCOM INTERNAT LTD) 17 January 2001 (2001-01-17) * page 4, line 13-20; figures 1-5 * | 1,5-7, 9-12,20, 21 | |

The present search report has been drawn up for all claims

| Place of search | Date of completion of the search | Examiner |
|---|---|---|
| MUNICH | 5 August 2003 | Fanjul Caudevilla, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 03 00 7287

This annex lists the patent family members relating to the patent documents cited in the above-mentioned European search report.
The members are as contained in the European Patent Office EDP file on
The European Patent Office is in no way liable for these particulars which are merely given for the purpose of information.

05-08-2003

| Patent document cited in search report | | Publication date | Patent family member(s) | | Publication date |
|---|---|---|---|---|---|
| GB 2304250 | A | 12-03-1997 | NONE | | |
| US 5404376 | A | 04-04-1995 | AU | 688375 B2 | 12-03-1998 |
| | | | AU | 7723194 A | 27-03-1995 |
| | | | BR | 9405581 A | 08-09-1999 |
| | | | CN | 1115196 A ,B | 17-01-1996 |
| | | | EP | 0667999 A1 | 23-08-1995 |
| | | | FI | 952207 A | 08-05-1995 |
| | | | JP | 9504414 T | 28-04-1997 |
| | | | NZ | 273796 A | 29-01-1997 |
| | | | SG | 52345 A1 | 28-09-1998 |
| | | | WO | 9507587 A1 | 16-03-1995 |
| | | | US | 5670964 A | 23-09-1997 |
| US 6353743 | B1 | 05-03-2002 | US | 2001041535 A1 | 15-11-2001 |
| US 6246861 | B1 | 12-06-2001 | NONE | | |
| FR 2794313 | A | 01-12-2000 | FR | 2794313 A1 | 01-12-2000 |
| GB 2352134 | A | 17-01-2001 | NONE | | |

EPO FORM P0459

For more details about this annex : see Official Journal of the European Patent Office, No. 12/82